# EUROPÄISCHE PATENTSCHRIFT

(11) **EP 3 286 612 B1**
(45) Veröffentlichungstag und Bekanntmachung des Hinweises auf die Patenterteilung: **05.04.2023**
(21) Anmeldenummer: 16717910.0
(22) Anmeldetag: 20.04.2016
(51) Int. Cl.: G05B 19/042, G05B 19/05, G05B 19/418, B65G 43/00

(54) **FÖRDERVORRICHTUNG MIT KONFIGURATIONSÄNDERUNG**
CONVEYING DEVICE WITH CONFIGURATION CHANGE
DISPOSITIF DE TRANSPORT À CHANGEMENT DE CONFIGURATION

(30) Priorität: 20.04.2015 DE 102015106024
(43) Veröffentlichungstag der Anmeldung: 28.02.2018
(73) Patentinhaber: Interroll Holding AG, 6592 Sant' Antonino (CH)
(72) Erfinder: HENZE, Herbert, 42929 Wermelskirchen (DE)
(74) Vertreter: Kohlhof, Stephan
(86) Internationale Anmeldenummer: PCT/EP2016/058756
(87) Internationale Veröffentlichungsnummer: WO 2016/169982

(56) Entgegenhaltungen:
- DE-A1- 4 100 198
- DE-A1-102005 013 285
- DE-A1-102008 053 557
- US-A1- 2004 195 078
- US-B1- 6 640 156

## Beschreibung

Die Erfindung betrifft eine Fördervorrichtung zur Förderung von Gegenständen wie Behältern oder Paketen, umfassend eine Mehrzahl von Fördersegmenten, wobei jedes Fördersegment einen Förderantrieb und eine Steuerungseinheit zur Steuerung des Förderantriebs aufweist, eine Buskommunikation, wobei jede Steuerungseinheit mit der Buskommunikation verbunden ist zum Senden und oder Empfangen von Steuerungssignalen über die Buskommunikation. Ein weiterer Aspekt der Erfindung ist ein Verfahren zum Steuern einer Fördervorrichtung zur Förderung von Gegenständen wie Behältern oder Paketen, die Fördervorrichtung umfasst eine Mehrzahl von Fördersegmenten, wobei jedes Fördersegment einen Förderantrieb und eine Steuerungseinheit mit einem Mikroprozessor zur Steuerung des Förderantriebs aufweist, eine Buskommunikation, mit der die Steuerungseinheiten verbunden sind, mit dem Schritt: Abspeichern einer ersten Steuerungskonfiguration in einem mit dem Mikroprozessor verbundenen ersten elektronischen Speicher in der Steuerungseinheit.

Fördervorrichtung und Verfahren zum Steuern von solchen Fördervorrichtungen der eingangs genannten Art werden dazu verwendet, um Gegenstände wie Paletten, Kisten, Koffer, Postsendungen und dergleichen in intralogistischen Anwendungen zu befördern. Die Förderstrecken sind dabei aufgebaut aus einer Mehrzahl von Fördersegmenten, die aneinander gereiht sind. Jedes Fördersegment weist einen Förderantrieb auf, der individuell angesteuert werden kann. Zum Zweck dieser individuellen Ansteuerung ist jedes Fördersegment mit einer Steuerungseinheit ausgerüstet. Grundsätzlich kann dabei jedes Fördersegment eine separate, in einem Gehäuse angeordnete Steuerungseinheit aufweisen oder es können die Steuerungseinheiten für mehrere benachbarte Fördersegmenten in einem gemeinsamen Steuerungsmodul zusammengefasst sein.

Aus der US 6,640,156 B1 ist eine Sortiervorrichtung für Banknoten bekannt. Die Sortiervorrichtung umfasst eine Anzahl von Blattverarbeitungsmodulen, die miteinander verbunden sind, um den Durchlauf von Blättern zwischen ihnen zu ermöglichen, wobei jedes Blattverarbeitungsmodul mindestens eine Blattüberwachungs- oder Blatthandhabungskomponente enthält; einen Satz von Knoten, von denen jeder einen Prozessor enthält, wobei jedes Blattverarbeitungsmodul durch einen oder mehrere Knoten gesteuert wird; ein verteiltes Steuersystem, das logisch in einer Anzahl von Untersystemen angeordnet ist, wobei die Funktionen jedes Untersystems durch einen oder mehrere der Knoten ausgeführt werden; und ein Kommunikationsnetzwerk, das die Knoten miteinander verbindet, um es den Knoten zu ermöglichen, synchron zu arbeiten und miteinander zu kommunizieren.

Aus der US2004/195078 A1 ist ein Fördersystem mit mehreren Fördersegmenten bekannt. Jedes Fördersegment umfasst mehrere motorbetriebene Förderrollen. Jedes Fördersegment umfasst ferner ein Steuerungssystem mit einer Segment- bzw. Funktionssteuerung, die mit mehreren Motorsteuerungen eines Fördersegments verbunden ist. Die Motorsteuerungen steuern die jeweiligen Motoren. Eine Buskommunikation verbindet die Segmentsteuerungen der einzelnen Fördersegmente.

Die Steuerungseinheiten beziehungsweise Steuerungsmodule sind mittels einer Buskommunikation miteinander verbunden. Diese Buskommunikation dient zur Übermittlung von Signalen, die im Zusammenhang mit der Förderung der Gegenstände auf der Förderstrecke der Fördervorrichtung stehen. Insbesondere können hierbei Signale übermittelt werden, welche die Anwesenheit eines Gegenstands in einem bestimmten Fördersegment signalisieren. Ein solches Präsenzsignal oder Belegtsignal kann beispielsweise mittels eines Sensors wie einer Lichtschranke, der an die Steuerungseinheit des Fördersegments angeschlossen ist, ermittelt werden. Weiterhin werden Antriebssignale zur Aktivierung eines Förderantriebs über die Buskommunikation übermittelt und es können gegebenenfalls weitere Signale, beispielsweise für Einschleuse- oder Ausschleusevorgänge, Hebevorrichtungen und dergleichen übermittelt werden.

Grundsätzlich ist es bekannt, solche Fördervorrichtungen mit einer zentralen Steuerung auszurüsten. Bei einer solchen zentralen Steuerung übernimmt eine zentral angeordnete Steuerungsvorrichtung, beispielsweise eine SPS-Steuerung, die Steuerung des Fördervorgangs innerhalb der Fördervorrichtung oder eines Streckenabschnitts der Fördervorrichtung.

Zu diesem Zweck sendet die zentrale Steuerungsvorrichtung über die Buskommunikation Befehle an die einzelnen Steuerungseinheiten, diese Befehle beinhalten typischerweise ein Aktivierungssignal für den Förderantrieb, ein Deaktivierungssignal für den Förderantrieb, Parameterangaben für die Geschwindigkeit des Förderantriebs und dergleichen. Die zentrale Steuerungsvorrichtung empfängt wiederum Signale von den Steuerungseinheiten, beispielsweise ein Belegtsignal. Die gesamte logische Abwicklung des Fördervorgangs findet bei dieser zentralen Steuerungsweise in der zentralen Steuerungsvorrichtung statt, die einzelnen Steuerungseinheiten dienen lediglich der Durchleitung und gegebenenfalls Modulation von Signalen.

Neben dieser zentralen Steuerungsweise ist auch eine dezentrale Steuerungsweise bekannt. Bei der dezentralen Steuerungsweise wird die logische Abwicklung des Fördervorgangs in die einzelnen Steuerungseinheiten verlegt. Die Steuerungseinheiten tauschen zu diesem Zweck untereinander Signale aus, beispielsweise können benachbarte Steuerungseinheiten in Kenntnis von der Belegtheit oder Aufnahmefähigkeit zumindest ihres stromabwärtsgelegenen benachbarten Fördersegments gesetzt sein. In Abhängigkeit des solcher Art erhaltenen Signals über die Aufnahmekapazität oder die Belegung des stromabwärts benachbarten Fördersegments aktiviert eine Steuerungseinheit den an sie angeschlossenen Förderantrieb, um auf diese Weise die Gegenstände kollisionsfrei über die Förderstrecke zu transportieren. Zur Vermeidung von Beschädigungen an den geförderten Gegenständen wird vorzugsweise ein staudruckloser Fördermodus gesteuert. Dies bedeutet, dass zu keinem Zeitpunkt innerhalb der Förderstrecke die geförderten Gegenstände miteinander in Kontakt kommen, so dass zuverlässig vermieden wird, dass durch die Addition von Förderkräften in mehreren aneinander liegenden Gegenständen ein stromabwärtsgelegener Gegenstand durch die dadurch möglichen hohen Kräfte beschädigt wird. Grundsätzlich wird bei einem staudrucklosem Fördermodus zwischen zwei verschiedenen Betriebsarten unterschieden, dem Einzelabzug, bei dem ein Gegenstand aus einem Fördersegment in das stromabwärts gelegene Fördersegment gefördert wird, sobald dieses den auf ihr lagernden Gegenstand weitergefördert hat und dem Blockabzugsmodus, bei dem ein Fördersegment ihren Förderantrieb aktiviert, sobald der Förderantrieb des stromabwärts benachbarten Fördersegments aktiviert wird. Grundsätzlich sind beide Betriebsweisen sowohl mit einer zentralen als auch mit einer dezentralen Steuerungsweise umsetzbar. Zum Zwecke der entsprechenden Ansteuerung der Förderantriebe nach einer dieser beiden Betriebsweisen oder anderen, als Mischform oder vollständig anderer Steuerungsweise realisierte Förderung ist eine Kommunikation von Signalen wie Steuerungsbefehlen, Belegungssignalen, und dergleichen über die Buskommunikation erforderlich.

Eine Kommunikation über die Buskommunikation erfordert grundsätzlich ein sogenanntes Busprotokoll. Im Busprotokoll ist festgeschrieben, in welcher Form Signale über die Buskommunikation gesendet werden müssen, damit diese zuverlässig bei einem Empfänger ankommen, von diesem als an ihn adressiertes Signal interpretiert werden können und die darin enthaltenen Informationen ausgelesen werden können. Grundsätzlich sind zentrale Steuerungsvorrichtungen in verschiedenen Varianten verfügbar, die unterschiedliche Steuerungsweisen einsetzen und nach unterschiedlichen Busprotokollen arbeiten, geläufige Busprotokolle sind beispielsweise TCP/IP, Profibus, CAN.

Die grundsätzliche Auswahl zwischen zentraler Steuerungsart und dezentraler Steuerungsart, sowie die unterschiedlichen Ausgestaltungen von zentralen und dezentralen Steuerungsarten mit einer stärker oder weniger stark ausgeprägten Verlagerung logischer Prozessschritte aus einer zentralen Steuerungsvorrichtung in die dezentralen Steuerungseinheiten, die unterschiedlichen Steuerungsweisen nach Art des Einzelabzugs, Blockabzugs oder Mischformen daraus und die unterschiedlichen Kommunikationsweisen mit verschiedenen Busprotokollen eröffnen eine zunächst prinzipiell vorteilhafte große Vielfalt und Gestaltungsfreiheit bei dem Aufbau von intralogistischen Fördersystemen. Die dadurch erforderlichen Systemspezifikationen ermöglichen es, innerhalb eines definierten Systems, welches sowohl die Steuerungshierarchie als auch die Steuerungsweise und das Kommunikationsprotokoll definiert, Steuerungseinheiten herzustellen, die auf die jeweilige Systemanforderung maßgeschneidert hergestellt und somit hinsichtlich der Fertigungskosten optimiert sind. Da in größeren Fördervorrichtungen eine sehr hohe Anzahl an Steuerungseinheiten zu verbauen ist, stellen diese einen erheblichen Anteil an den Gesamtkosten des Fördersystems dar und unterliegend folglich einem hohen Kostendruck.

Nachteilig an der grundsätzlich hohen Variantenvielfalt in den Fördersystemen ist jedoch die geringe oder nicht vorhandene Austauschbarkeit von Systemkomponenten aus verschiedenen Fördersystemen. Regelmäßig ist es dem Benutzer von solchen Fördervorrichtungen nicht möglich, Komponenten von Fördersystemen unterschiedlicher Systemhersteller miteinander zu kombinieren oder hierfür sind individuelle Anpassungen notwendig. Häufig sind Komponenten von Fördersystemen eines einzigen Herstellers, die aus unterschiedlichen Systemgenerationen stammen, nicht kompatibel miteinander. Die Folge hiervon ist, dass zwar für jedes Fördersystem maßgeschneiderte und damit kostengünstige Komponenten wie die Steuerungseinheiten, Förderantriebe und die gegebenenfalls erforderlichen zentralen Steuerungsvorrichtungen hergestellt werden können und verfügbar sind, einher geht aber eine umfangreiche Lagerhaltung der einzelnen Systemkomponenten, um für bereits installierte Systeme sicherzustellen, dass nachträglicher Ersatz defekter Komponenten oder für Erweiterungen oder Umbauvorgänge erforderliche zusätzliche Komponenten lieferbar sind. Diese umfangreiche Lagerhaltung und damit verbundenen Notwendigkeit der Bereithaltung von Herstellungskapazitäten für eine Vielzahl von unterschiedlichen Fördersystemen verursacht auf Seite der Hersteller von solchen Fördervorrichtungen zusätzliche Kosten. Dies steht im Widerspruch zu der eigentlich angestrebten kosteneffizienten Bereitstellung solcher Fördervorrichtungen.

Die Erfindung adressiert diese grundsätzlich bestehende Problematik, einerseits maßgeschneiderte Fördersysteme für bestimmte Anwendungen bereitzustellen, andererseits die Variantenvielfalt zu überwinden und daraus resultierende Kompatibilitätsgrenzen zu vermeiden.

Erfindungsgemäß wird eine diesbezüglich verbesserte Fördervorrichtung der eingangs genannten Art bereitgestellt, welche die Notwendigkeit der Lagerhaltung zahlreicher unterschiedlicher Systemkomponenten in einer kostengünstigen Systemlösung maßgeblich reduziert. Dies wird durch eine eingangs genannte Fördervorrichtung erreicht, bei der jede Steuerungseinheit einen Mikroprozessor zur Verarbeitung von Steuerungssignalen, einen ersten, mit dem Mikroprozessor verbundenen elektronischen Speicher, in dem eine erste Steuerungskonfiguration abgespeichert ist, und einen zweiten elektronischen Speicher, in dem eine zweite von der ersten verschiedene Steuerungskonfiguration, vorzugsweise mehrere von der ersten verschiedene Steuerungskonfigurationen abgespeichert sind, wobei der Mikroprozessor ausgebildet ist, um in einem ersten Betriebsmodus den Förderantrieb mit der im ersten Speicher abgespeicherten ersten Steuerungskonfiguration anzusteuern, bei Empfang eines Konfigurationsänderungsbefehls die zweite bzw. eine von der ersten verschiedene Steuerungskonfiguration aus dem zweiten Speicher in den ersten Speicher zu laden, und hiernach in einem zweiten Betriebsmodus den Förderantrieb mit der im ersten Speicher abgespeicherten zweiten bzw. von der ersten verschiedenen Steuerungskonfiguration anzusteuern.

Erfindungsgemäß werden in den Steuerungseinheiten der erfindungsgemäßen Fördervorrichtung zwei elektronische Speicher bereitgestellt, die unterschiedlichen Zwecken dienen und mittels des Mikroprozessors angesteuert, abgefragt und verwaltet werden können. Der erste und der zweite Speicher können hinsichtlich ihres physikalischen Prinzips oder Aufbaus, hinsichtlich Ihrer Lesegeschwindigkeit und/oder hinsichtlich ihrer Speicherkapazität voneinander verschieden sein.

Der erste Speicher dient dazu, die jeweils verwendete Steuerungskonfiguration abzuspeichern, dies ist die erste Steuerungskonfiguration. Der Mikroprozessor verarbeitet die Steuerungssignale nach dieser ersten Steuerungskonfiguration im Betrieb der Fördervorrichtung, das heißt, der Mikroprozessor arbeitet beispielsweise nach einem Busprotokoll, einer Steuerungsweise oder Steuerungsparametern, die in dieser ersten Steuerungskonfiguration definiert sind. Der erste Speicher ist insbesondere ein Speicher mit schnellem Lesezugriff, um einen verzögerungsfreien Ablauf des Steuerungs- bzw. Fördervorgangs zu gewährleisten. Der erste Speicher kann beispielsweise integral mit dem Mikroprozessor ausgeführt sein.

Der zweite elektronische Speicher kann gegenüber dem ersten Speicher einen langsameren Lesezugriff aufweisen, sollte aber vorzugsweise eine größere Speicherkapazität als der erste Speicher haben. Im zweiten Speicher ist zumindest eine zweite Steuerungskonfiguration abgespeichert, die von der ersten Steuerungskonfiguration verschieden ist. Insbesondere ist es bevorzugt, dass in den zweiten elektronischen Speicher mehrere voneinander selbst und von der ersten Steuerungskonfiguration verschiedene Steuerungskonfigurationen abgespeichert sind. Diese Steuerungskonfigurationen in dem zweiten elektronischen Speicher stellen ein Kontingent dar, welches als Alternative zu der ersten Steuerungskonfiguration in den ersten elektronischen Speicher geladen werden kann, um somit die Steuerungseinheit nach einer anderen Steuerungskonfiguration zu betreiben. Grundsätzlich ist zu verstehen, dass sowohl die erste Steuerungskonfiguration als auch die zweite beziehungsweise die weiteren, verschiedenen Steuerungskonfigurationen in den ersten elektronischen Speicher und entsprechend den zweiten elektronischen Speicher vorab einprogrammiert sein können, also im Auslieferungszustand der Steuerungseinheit bereits gespeichert sind. Desweiteren ist zu verstehen, dass es grundsätzlich auch möglich sein kann, diese Steuerungskonfigurationen in den ersten beziehungsweise zweiten elektronischen Speicher während des laufenden Betriebs oder im Zuge eines Programmierschritts bei Installation der erfindungsgemäßen Fördervorrichtung oder im Zuge eines Update-Schrittes nach erfolgter Installation der erfindungsgemäßen Fördervorrichtung einzuspeichern. Dies kann zum Beispiel als Firmware Update erfolgen, hierbei werden Steuerungskonfigurationen in der ersten und/oder der zweiten Speicher ergänzt oder ersetzt. Insbesondere ist es bevorzugt, dass die erste, die zweite und alle weiteren Steuerungskonfigurationen im zweiten Speicher abgespeichert sind und bleiben und die erste bzw. die zuletzt verwendete Steuerungskonfiguration bei jedem Hochfahren der Fördervorrichtung aus dem zweiten Speicher in den ersten Speicher geladen wird.

Die erfindungsgemäße Fördervorrichtung wird hierdurch in die Lage versetzt, in zumindest zwei unterschiedlichen Betriebsmodi, also dem ersten oder dem zweiten Betriebsmodus, betrieben zu werden. Insbesondere wird ermöglicht, die erfindungsgemäße Fördervorrichtung in einer Vielzahl unterschiedlicher Betriebsmodi nach den entsprechend mehreren Steuerungskonfigurationen, die in dem zweiten elektronischen Speicher abgespeichert sind, betreiben zu können. Erfindungsgemäß wird folglich erreicht, dass durch Ergänzung eines zweiten elektronischen Speichers in jeder Steuerungseinheit eine einfache Konfigurationsmöglichkeit der Steuerungseinheiten bereit gestellt wird, um die Steuerungseinheiten an unterschiedliche Betriebsmodi anzupassen und auf diese Weise zu befähigen, nach unterschiedlichen Busprotokollen, unterschiedlichen Steuerungsarten (zentral, dezentral, ...) und unterschiedlichen Steuerungsweisen (Einzelabzug, Blockabzug, ...) das jeweilige Fördersegment zu steuern und die für diese Steuerung notwendige Kommunikation zu betreiben. Es wird somit eine universell nutzbare Steuerungseinheit bereitgestellt, die sich ohne nennenswerte Mehrkosten herstellen lässt und in einer einfachen, schnellen Weise an den jeweils individuell erforderlichen Betriebsmodus anpassen lässt. Diese Anpassung kann durch den Konfigurationsänderungsbefehl ausgelöst werden. Der Konfigurationsänderungsbefehl kann hierbei direkt, beispielsweise über eine Benutzerschnittstelle, an der Steuerungseinheit eingegeben werden, hierzu können entsprechende Knöpfe, Tasten oder sonstige Auslösemechanismen an der Steuerungseinheit sein. Alternativ hierzu kann der Konfigurationsänderungsbefehl über die Buskommunikation an die Steuerungseinheit gesendet werden, dies ermöglicht insbesondere die ergonomisch günstige, zeitgleiche Konfigurationsänderung in mehreren Steuerungseinheiten oder in sämtlichen Steuerungseinheiten der Fördervorrichtung.

Gemäß einer ersten bevorzugten Ausführungsform ist vorgesehen, dass der Mikroprozessor ausgebildet ist, um bei Empfang des Konfigurationsänderungsbefehls die erste Steuerungskonfiguration aus dem ersten elektronischen Speicher durch die zweite bzw. die von der ersten verschiedene Steuerungskonfiguration aus dem zweiten Speicher in dem ersten Speicher zu ersetzen. Bei dieser Ausführungsform wird bei Empfangen eines entsprechenden Konfigurationsänderungsbefehls die erste Steuerungskonfiguration im ersten elektronischen Speicher durch eine davon verschiedene Steuerungskonfiguration ersetzt, die aus dem zweiten elektronischen Speicher in den ersten elektronischen Speicher geladen wird.

Weiterhin ist es bevorzugt, dass der erste elektronische Speicher ein flüchtiger oder nicht-flüchtiger Speicher, insbesondere ein Flash-Speicher ist und der zweite elektronische Speicher ein nicht-flüchtiger Speicher, insbesondere ein Flash-Speicher ist. Diese spezifische Auswahl des ersten und zweiten Speichers ermöglicht einerseits, einen schnellen Speicherbaustein, nämlich einen flüchtigen, beispielsweise einen RAM (Random Access Memory) als ersten Speicher einzusetzen und hierdurch eine schnelle Signalverarbeitung für den laufenden Betrieb der Fördervorrichtung zu erzielen. Dieser erste elektronische Speicher nach Bauart RAM muss dabei erfindungsgemäß keine besonders hohe Speicherkapazität aufweisen, da in ihm lediglich die jeweils für den tatsächlichen Betriebsmodus benötigte Steuerungskonfiguration abgespeichert sein muss. Der zweite elektronische Speicher ist demgegenüber als Flash-Speicher ausgebildet. Ein solcher Flash-Speicher zeichnet sich durch eine im Vergleich zum RAM-Speicher langsamere Signalübertragung aus, kann jedoch sehr kostengünstig mit einer hohen Speicherkapazität hergestellt werden. Im zweiten elektronischen Speicher können daher eine Vielzahl unterschiedlicher Steuerungskonfigurationen kostengünstig abgespeichert werden, ohne dass die verzögerte Auslesefähigkeit des Flash-Speichers sich auf den regulären Förderbetrieb der erfindungsgemäßen Fördervorrichtung nachteilig auswirkt. [Als Flash-Speicher kommen hierbei insbesondere auch Medien in Betracht, die an eine Datenschnittstelle der Steuerungseinheit angeschlossen werden können, beispielsweise Speicherkarten, wie SD-Karten, Kompaktflashkarten und dergleichen. Die erfindungsgemäße Steuerungseinheit muss daher nicht zwangsläufig mit einem fest installierten zweiten Speicher ausgerüstet sein, sondern dieser zweite elektronische Speicher kann auch durch eine entsprechende elektronische Schnittstelle zum Anschluss eines Speicherelements verwirklicht sein.] Aus dem zweiten Speicher ist lediglich im Zuge eines Wechselns des Betriebsmodus eine Auslesetätigkeit erforderlich, hierbei ist die geringere Auslesegeschwindigkeit des zweiten Speichers unkritisch.

Weiterhin ist es bevorzugt, dass die erste Steuerungskonfiguration ein erstes Busprotokoll zur Konfiguration der Datenkommunikation über die Buskommunikation beinhaltet und die zweite bzw. die von der ersten verschiedenen Steuerungskonfiguration ein zweites, von dem ersten verschiedenes Busprotokoll zur Konfiguration der Datenkommunikation über die Buskommunikation beinhaltet.

Gemäß dieser Ausführungsform kann durch einen Wechsel der Steuerungskonfiguration zwischen zwei unterschiedlichen Busprotokollen gewählt werden. Die erfindungsgemäße Steuerungseinheit beziehungsweise Fördervorrichtung wird hierdurch in die Lage versetzt, mit zumindest zwei, vorzugsweise mehreren unterschiedlichen Busprotokollen wahlweise zu arbeiten und die Kommunikation über die Buskommunikation gemäß eines jeweils daraus ausgewählten Busprotokolls durchzuführen. Dabei ist grundsätzlich zu verstehen, dass mittels des Busprotokolls die Übertragung zwischen den Steuerungseinheiten beziehungsweise innerhalb der Fördervorrichtung an unterschiedliche Übertragungsmedien (z. B. Funk, Lichtleiter, Ethernet, CAN, RS 485, RS 232) angepasst werden kann und an unterschiedliche Kommunikationsprotokolle (z. B. TCP/IP, CAN, Ethernet/IP, Profinet, Profibus, Modbus) angepasst werden kann.

Noch weiter ist es bevorzugt, dass die erste Steuerungskonfiguration ein erstes Steuerungsverfahren beinhaltet, welches den Mikroprozessor zum Empfang von Steuerungsbefehlen über die Buskommunikation und der Weiterleitung dieser Steuerungsbefehle an den Förderantrieb in einem zentralen Steuerungsmodus konfiguriert und die zweite bzw. die von der ersten verschiedene Steuerungskonfiguration ein zweites, von dem ersten verschiedenes Steuerungsverfahren beinhaltet, welches den Mikroprozessor zum Empfang eines Belegungssignals und/oder Fördersignals von einer Steuerungseinheit eines benachbarten Fördersegments und zur logischen Generierung eines Steuerungsbefehls in dem Mikroprozessor aus diesem Belegungssignal und/oder Fördersignal und der Versendung dieses Steuerungsbefehls an den Förderantrieb in einem dezentralen Steuerungsmodus konfiguriert. Mit dieser bevorzugten Ausführungsform wird erreicht, dass die erfindungsgemäße Fördervorrichtung bzw. die darin eingesetzten Steuerungseinheiten eine Multifunktionsfähigkeit aufweisen. Die Steuerungseinheiten können durch die entsprechende Anpassung der Steuerungskonfiguration an unterschiedliche Steuerungsarten, beispielsweise eine dezentrale Steuerung oder eine zentrale Steuerung, angepasst werden und für die entspreche Durchleitung beziehungsweise die entsprechende dezentrale logische Signalverarbeitung konfiguriert werden. Gegenüber den bislang bekannten Lösungen, bei denen Steuerungsprogramme in Festwertspeichern innerhalb der Steuerungseinheit abgelegt und damit nicht veränderbar waren, kann erfindungsgemäß erreicht werden, dass in den zweiten elektronischen Speicher eine Vielzahl, beispielsweise über 100, unterschiedliche Steuerungskonfigurationen abgespeichert sind und jede dieser Steuerungskonfigurationen selektiv in den ersten elektronischen Speicher geladen werden könnte, um einen entsprechenden Betriebsmodus herbeizuführen. Die Steuerungskonfigurationen enthalten dabei vorzugsweise in Form von Zustandstabellen die Beschreibung des Förderablaufs, indem innerhalb dieser Zustandstabellen die Steuerungsprozesse als Zustandsautomaten beschrieben sind. Hierdurch wird erreicht, dass die Steuerungsabläufe im Vergleich zu ansonsten erforderlichen Maschinenbefehlen mit einem sehr kompakten Speicherbedarf abgespeichert werden können und folglich ein Microcontroller mit verhältnismäßig wenig Speicherkapazität im ersten elektronischen Speicher in der Steuerungseinheit verbaut sein kann.

Gemäß einer weiteren bevorzugten Ausführungsform ist vorgesehen, dass die erste Steuerungskonfiguration ein erstes Steuerungsverfahren beinhaltet, welches den Mikroprozessor zur Steuerung eines ersten Fördermodus konfiguriert, und die zweite bzw. die von der ersten verschiedene Steuerungskonfiguration ein zweites, von dem ersten verschiedenes Steuerungsverfahren beinhaltet, welches den Mikroprozessor zur Steuerung eines zweiten, von dem ersten verschiedenen Fördermodus konfiguriert, wobei der erste und/oder der zweite Fördermodus vorzugsweise ausgewählt ist aus
- einem Einzelabzugsmodus, in welchem der Mikroprozessor den Förderantrieb eines Fördersegments aktiviert, wenn er ein Signal erhält, welches beinhaltet, dass ein stromabwärts benachbart angeordnetes Fördersegment nicht belegt ist,
- einem Blockabzugsmodus, in welchem der Mikroprozessor den Förderantrieb eines Fördersegments aktiviert, wenn er ein Signal erhält, welches beinhaltet, dass der Förderantrieb eines stromabwärts benachbart angeordneten Fördersegment aktiviert,
- einem Transfermodus, in welchem der Mikroprozessor konfiguriert ist zur Ansteuerung eines Förderantriebs und eines Transferantriebs, der den geförderten Gegenstand aus dem Fördersegment horizontal ein- oder ausschleust,
- einem Hebemodus, in welchem der Mikroprozessor konfiguriert ist zur Ansteuerung eines Förderantriebs und eines Hebeantriebs, der den geförderten Gegenstand aus dem Fördersegment vertikal ein- oder ausschleust, und
- einem Sortiermodus, in welchem der Mikroprozessor konfiguriert ist zum Empfang eines Sortiersignals und zur Ansteuerung eines Förderantriebs und eines Sortierantriebs, der den geförderten Gegenstand in Abhängigkeit des empfangenen Sortiersignals auf zumindest zwei, vorzugsweise mehrere unterschiedliche Ausgänge aus dem Fördersegment sortiert.

Gemäß dieser Ausführungsform kann zwischen verschiedenen Fördermodi ausgewählt werden, die im zweiten elektronischen Speicher gespeichert sind. Hierdurch wird eine schnelle Konfiguration der Fördersegmente in einer Förderstrecke in einem von mehreren möglichen Fördermodi ermöglicht. Dabei kann auch so konfiguriert werden, dass einzelne Fördersegmente mit einem voneinander verschiedenen Fördermodus konfiguriert sind. Unter einem Fördermodus ist hierbei eine Betriebsweise zu verstehen, die bei vorgegebenem Busprotokoll und bei vorgegebener dezentraler Steuerungskonfiguration einen Förderablauf der Gegenstände definiert. Insbesondere kann ein solcher Förderablauf durch sogenannte ZPA (zero pressure accumulation) - Betriebsweise umgesetzt sein, in der die Ansteuerung der einzelnen Fördersegmente derart erfolgt, dass die Gegenstände ohne Kontakt zueinander gefördert werden. Dies kann beispielsweise im Einzelplatzabzug erfolgen, bei dem ein Gegenstand genau dann in das nächste stromabwärtsliegende Fördersegment gefördert wird, wenn dieses nächste Fördersegment frei ist, was typischerweise durch einen entsprechenden Sensor des nächsten Fördersegments detektiert und signalisiert wird. Weiterhin kann ein sogenannter Blockabzug als ZPA-Betriebsweise konfiguriert sein, bei dem ein Gegenstand genau dann in das nächste stromabwärtsliegende Fördersegment gefördert wird, wenn der Gegenstand in diesem nächsten Fördersegment weitergefördert wird, was typischerweise durch ein entsprechendes Aktivierungssignal des Förderantriebs des nächsten Fördersegments detektiert und signalisiert wird. Weitere Fördermodi richten sich auf bestimmte Fördersegmente mit Zusatzfunktionen wie Weichen (Ein- oder Ausschleusefunktion), Hebeanlagen, Sortierfunktion mittels eines Kodierungslesers und einer Verteileinrichtung auf zwei oder mehr alternative Fördersegmentausgänge und dergleichen. In diesen Fällen nimmt die Steuerungseinheit über zusätzliche Signaleingänge und/oder -ausgänge die entsprechend zusätzlichen Steuerungsfunktionen solcher Fördersegmente wahr.

Gemäß einer weiteren bevorzugten Ausführungsform ist vorgesehen, dass die Fördervorrichtung eine mit dem Mikroprozessor verbundene manuelle Benutzerschnittstelle umfasst und der Mikroprozessor ausgebildet ist, um einen Empfang eines Signals über die Benutzerschnittstelle als Konfigurationsänderungsbefehl zu verarbeiten. Grundsätzlich ist zu verstehen, dass sämtliche Konfigurationsvorgänge innerhalb der erfindungsgemäßen Steuerungsvorrichtung durch Anschließen eines separaten Konfigurationsrechners oder durch Softwaresteuerung von einem zentralen Steuerungsrechner, der an die Buskommunikation angeschlossen ist, ausgeführt werden können. Diese Notwendigkeit des Anschlusses eines zentralen Rechners zum Zwecke der Konfiguration kann jedoch gemäß dieser Ausführungsform vermieden werden, indem die Steuerungseinheiten mit einer Benutzerschnittstelle ausgerüstet sind, die einen Konfigurationsänderungsbefehl eingeben lässt. Diese manuelle Benutzerschnittstelle kann beispielsweise als mechanisches Tastelement, Betätigungsknopf, Touch-Screen oder dergleichen ausgeführt sein und insbesondere als binärer Schalter mit zwei Zuständen oder Mehrfachschalter mit mehreren Zuständen ausgeführt sein.

Gemäß einer dabei besonders bevorzugten Ausführungsform ist vorgesehen, dass die manuelle Benutzerschnittstelle ein mit einem Magnetsignal auslösbarer Schalter ist, insbesondere ein Reed-Kontakt oder ein Hall-Effekt-Sensor. Ein solcher, mit einem Magnetsignal auslösbarer Schalter kann zuverlässig verhindern, dass ein versehentlicher Konfigurationsänderungsbefehl eingegeben wird, beispielsweise durch versehentliche Berührung eines Schalters oder Tasters. Insbesondere kann durch einen solchen Magnet-betätigten-Schalter eine Konfigurationsänderung nur durch autorisierte Personen sichergestellt werden, beispielsweise in dem der Schalter nur durch eine magnetische Feldstärke auslösbar ist, die sich innerhalb eines bestimmten, durch eine Unter- und Obergrenze definierten Bereichs, bewegt und ein entsprechender Magnet zur Auslösung des Schalters nur an entsprechend autorisierte Personen ausgegeben wird.

Gemäß einer weiteren bevorzugten Ausführungsform ist vorgesehen, dass die Fördervorrichtung eine mit dem Mikroprozessor verbundene optische Benutzerschnittstelle zur optischen Ausgabe von Signalen umfasst und der Mikroprozessor ausgebildet ist, um über die optische Benutzerschnittstelle eine Anzeige und/oder Auswahl der ersten und zweiten bzw. verschiedenen Steuerungskonfiguration anzuzeigen. Eine solche optische Benutzerschnittstelle bildet die zuvor erläuterte unabhängige Funktionalität der Steuerungseinheiten noch weiter fort und ermöglicht es, dass dem Benutzer ein Zustand einer Steuerungseinheit direkt im Bereich der Steuerungseinheit angezeigt wird. Die optische Benutzerschnittstelle kann dabei in Gestalt von einzelnen LED's, die anhand einer entsprechenden Beschriftung oder einer Beschreibung in einem Benutzerhandbuch bestimmte Signale ausgeben, verwirklicht sein. Weiterhin sind andere Formen der optischen Benutzerschnittstelle, beispielsweise LCD-Bildschirmflächen, denkbar. Insbesondere kann die optische Benutzerschnittstelle auch mit der manuellen Benutzerschnittstelle kombiniert sein, beispielsweise in Form eines Touch-Screen oder dergleichen, um eine besonders effiziente und platzsparende Bereitstellung der beiden Benutzerschnittstellen zu verwirklichen.

Gemäß einer dabei bevorzugten Ausführungsform ist vorgesehen, dass der Mikroprozessor ausgebildet ist, um über die manuelle Benutzerschnittstelle eine Auswahl einer über die optische Benutzerschnittstelle angezeigten Steuerungskonfiguration zu empfangen. Diese Fortbildung ermöglicht es, mittels der manuellen Benutzerschnittstelle eine Auswahl für eine bestimmte Steuerungskonfiguration zu treffen und diese Auswahl zu überwachen beziehungsweise zu treffen, in dem die Steuerungskonfiguration über die optische Benutzerschnittstelle angezeigt wird. Die Verwirklichung dieser Ausgestaltung kann dabei in verschiedener Weise erfolgen, beispielsweise in Form von unterschiedlichen Menüebenen, die über die manuelle Benutzerschnittstelle ausgewählt und innerhalb welcher über die manuelle Benutzerschnittstelle navigiert und ausgewählt werden kann. Desweiteren kann die manuelle Benutzerschnittstelle so ausgebildet sein, dass sie durch unterschiedliche Auslöseweisen, beispielsweise eine kurze oder eine lange Auslösung, eine kurz aufeinanderfolgende Mehrfachauslösung oder Einzelauslösung, unterschiedliche Befehle umsetzt und hierdurch verschiedene Menüebenen betritt oder Auswahlen trifft.

Insbesondere ist es dabei bevorzugt, wenn der Mikroprozessor ausgebildet ist, um über die manuelle Benutzerschnittstelle eine erste Auswahlebene zur Wahl zwischen Busprotokollauswahl oder Steuerungsverfahrenswahl zu steuern und über die optische Benutzerschnittstelle anzuzeigen und bei Wahl der Busprotokollauswahl in der ersten Auswahlebene eine zweite Auswahlebene zur Wahl zwischen verschiedenen Busprotokollen zu steuern und über die optische Benutzerschnittstelle anzuzeigen, und bei Wahl der Steuerungsverfahrensauswahl in der zweiten Auswahlebene die zweite Auswahlebene zur Wahl zwischen verschiedenen Steuerungsverfahren zu steuern und über die optische Benutzerschnittstelle anzuzeigen. Mit dieser Fortbildungsform wird es möglich, über die manuelle Benutzerschnittstelle und die optische Benutzerschnittstelle sowohl eine Auswahl hinsichtlich eines Busprotokolls als auch eine Auswahl hinsichtlich eines Steuerungsverfahrens zu treffen und hierdurch die Steuerungseinheit individuell und ohne die Notwendigkeit des Anschlusses eines Rechners für die Einrichtung so zu konfigurieren, dass er in einer entsprechenden Fördervorrichtung eingesetzt werden kann. Dabei kann weiterhin vorgesehen sein, dass der Mikroprozessor ausgebildet ist, um über die manuelle Benutzerschnittstelle weitere Bedienfunktionen auszuwählen und/oder zu steuern zu können und über die optische Benutzerschnittstelle anzuzeigen, beispielsweise einen Selbsttest, oder ein Zurücksetzen auf eine werksseitige Vorkonfiguration.

Ein weiterer Aspekt der Erfindung ist ein Verfahren zum Steuern einer Fördervorrichtung zur Förderung von Gegenständen wie Behältern oder Paketen, die Fördervorrichtung umfassend eine Mehrzahl von Fördersegmenten, wobei jedes Fördersegment eine Förderantrieb und eine Steuerungseinheit mit einem Mikroprozessor zur Steuerung des Förderantriebs aufweist, eine Buskommunikation, mit der die Steuerungseinheiten verbunden sind, mit den Schritten: Abspeichern einer ersten Steuerungskonfiguration in einem mit dem Mikroprozessor verbundenen ersten elektronischen Speicher in der Steuerungseinheit, gekennzeichnet durch die Schritte: Abspeichern einer zweiten von der ersten verschiedene Steuerungskonfiguration, vorzugsweise mehrerer von der ersten verschiedene Steuerungskonfigurationen in einem zweiten elektronischen Speicher in der Steuerungseinheit, Verarbeiten von Steuerungssignalen in dem Mikroprozessor und Ansteuern des Förderantriebs nach der ersten Steuerungskonfiguration in einem ersten Betriebsmodus, Empfangen eines Konfigurationsänderungsbefehls, Laden der zweiten bzw. der von der ersten verschiedenen Steuerungskonfiguration aus dem zweiten Speicher in den ersten Speicher, insbesondere Ersetzen der ersten Steuerungskonfiguration durch die zweite bzw. die von der ersten verschiedene Steuerungskonfiguration und hiernach Verarbeiten von Steuerungssignalen in dem Mikroprozessor und Ansteuern des Förderantriebs nach der zweiten bzw. der von der ersten verschiedenen Steuerungskonfiguration in einem zweiten Betriebsmodus. Das Verfahren kann dabei fortgebildet werden, in dem die erste Steuerungskonfiguration ein erstes Busprotokoll zur Konfiguration der Datenkommunikation über die Buskommunikation beinhaltet und die Steuerungseinheit in dem ersten Betriebsmodus nach dem ersten Busprotokoll über die Buskommunikation sendet und/oder empfängt und die zweite bzw. die von der ersten verschiedenen Steuerungskonfiguration ein zweites, von dem ersten verschiedenes Busprotokoll beinhaltet und die Steuerungseinheit in dem zweiten Betriebsmodus nach dem zweiten Busprotokoll über die Buskommunikation sendet und/oder empfängt.

Weiterhin kann das Verfahren fortgebildet werden, indem die erste Steuerungskonfiguration ein erstes zentrales Steuerungsverfahren beinhaltet und der Mikroprozessor im ersten Betriebsmodus Steuerungsbefehle über die Buskommunikation empfängt und diese Steuerungsbefehle an den Förderantrieb weiterleitet und die zweite bzw. die von der ersten verschiedene Steuerungskonfiguration ein zweites, von dem ersten verschiedenes dezentrales Steuerungsverfahren beinhaltet und der Mikroprozessor in dem zweiten Betriebsmodus ein Belegungssignals und/oder Fördersignal von einer Steuerungseinheit eines benachbarten Fördersegments empfängt, dieses Belegungssignal und/oder Fördersignal logisch verarbeitet, in der logischen Verarbeitung einen Steuerungsbefehl generiert diesen Steuerungsbefehl an den Förderantrieb versendet.

Weiterhin kann das Verfahren fortgebildet werden, indem der Mikroprozessor den Konfigurationsänderungsbefehl über eine manuelle Benutzerschnittstelle an der Steuerungseinheit empfängt, insbesondere durch Auslösen eines Schalters, insbesondere eines Reed-Kontakts, mit einem Magnetsignal.

Weiterhin kann das Verfahren fortgebildet werden, indem der Mikroprozessor über eine optische Benutzerschnittstelle ein Signal für eine Anzeige und/oder Auswahl der ersten und zweiten bzw. verschiedenen Steuerungskonfiguration ausgibt.

Weiterhin kann das Verfahren fortgebildet werden, indem der Mikroprozessor über die manuelle Benutzerschnittstelle eine Auswahl einer über die optische Benutzerschnittstelle angezeigten Steuerungskonfiguration empfängt.

Weiterhin kann das Verfahren fortgebildet werden, indem der Mikroprozessor über die manuelle Benutzerschnittstelle ein Signal für eine erste Auswahlebene zur Wahl zwischen Busprotokollauswahl oder Steuerungsverfahrenswahl empfängt und über die optische Benutzerschnittstelle anzeigt, und bei Wahl der Busprotokollauswahl in der ersten Auswahlebene über die manuelle Benutzerschnittstelle in einer zweiten Auswahlebene ein Signal zur Wahl zwischen verschiedenen Busprotokollen empfängt und über die optische Benutzerschnittstelle anzeigt, und bei Wahl der Steuerungsverfahrensauswahl in der ersten Auswahlebene über die manuelle Benutzerschnittstelle in einer zweiten Auswahlebene ein Signal zur Wahl zwischen verschiedenen Steuerungsverfahren empfängt und über die optische Benutzerschnittstelle anzeigt.

Weiterhin kann das Verfahren fortgebildet werden, indem die Fördervorrichtung in der ersten Steuerungskonfiguration über den Mikroprozessor einen ersten Fördermodus steuert, und die Fördervorrichtung in der zweiten bzw. der von der ersten verschiedenen Steuerungskonfiguration über den Mikroprozessor einen zweiten, von dem ersten verschiedenen Fördermodus steuert, wobei der erste und/oder der zweite Fördermodus vorzugsweise ausgewählt ist aus
- einem Einzelabzugsmodus, in welchem der Mikroprozessor den Förderantrieb eines Fördersegments aktiviert, wenn er ein Signal erhält, welches beinhaltet, dass ein stromabwärts benachbart angeordnetes Fördersegment nicht belegt ist,
- einem Blockabzugsmodus, in welchem der Mikroprozessor den Förderantrieb eines Fördersegments aktiviert, wenn er ein Signal erhält, welches beinhaltet, dass der Förderantrieb eines stromabwärts benachbart angeordneten Fördersegment aktiviert,
- einem Transfermodus, in welchem der Mikroprozessor konfiguriert ist zur Ansteuerung eines Förderantriebs und eines Transferantriebs, der den geförderten Gegenstand aus dem Fördersegment horizontal ein- oder ausschleust,
- einem Hebemodus, in welchem der Mikroprozessor konfiguriert ist zur Ansteuerung eines Förderantriebs und eines Hebeantriebs, der den geförderten Gegenstand aus dem Fördersegment vertikal ein- oder ausschleust, und
- einem Sortiermodus, in welchem der Mikroprozessor konfiguriert ist zum Empfang eines Sortiersignals und zur Ansteuerung eines Förderantriebs und eines Sortierantriebs, der den geförderten Gegenstand in Abhängigkeit des empfangenen Sortiersignals auf zumindest zwei, vorzugsweise mehrere unterschiedliche Ausgänge aus dem Fördersegment sortiert.

Bezüglich dieses Steuerungsverfahrens und der einzelnen Verfahrensschritte hierzu wird Bezug genommen auf die zuvor erläuterten, korrespondierenden gegenständlichen Merkmale der Fördervorrichtrung und die hierzu erläuterten Varianten, Vorteile und bevorzugten Ausführungsformen.

Eine bevorzugte Ausführungsform der Erfindung wird anhand der beiliegenden Figuren erläutert. Es zeigen:
Fig. 1 eine schematische Ansicht eines Ausschnitts einer erfindungsgemäßen Fördervorrichtung, und
Fig. 2 ein Ablaufdiagramm für eine Auswahl einer Steuerungskonfiguration in einer Fördervorrichtung gemäß der Erfindung.

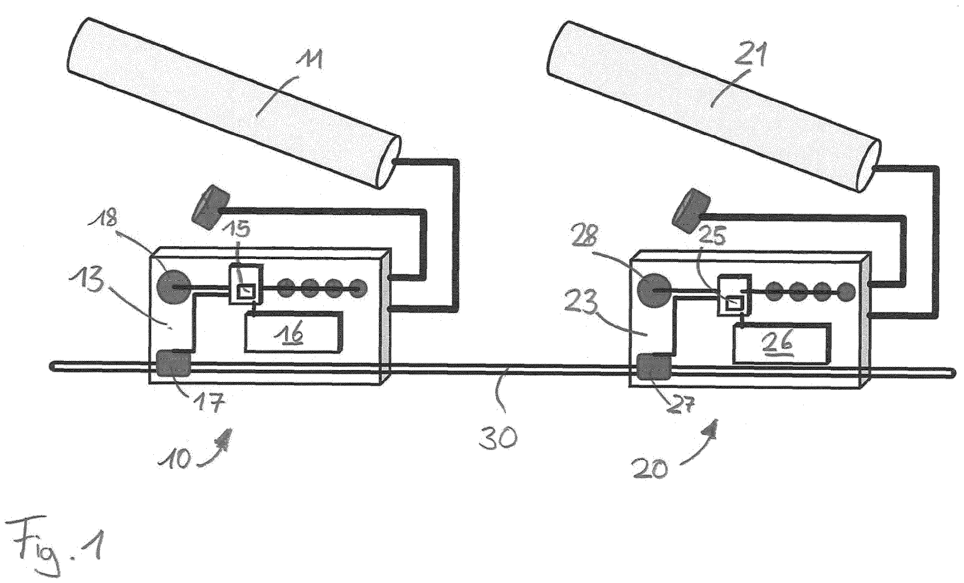

Bezugnehmend auf Fig. 1, umfasst eine erfindungsgemäße Fördervorrichtung eine Mehrzahl von Fördersegmenten, von denen in Fig. 1 zwei Fördersegmente 10, 20 dargestellt sind. Jedes Fördersegment verfügt über eine Motorrolle 11, 21, einen Lichtschrankensensor und eine Steuerungseinheit 13, 23, die über entsprechende elektrische Leitungen mit der Motorrolle beziehungsweise dem Lichtschrankensensor in dem jeweiligen Fördersegment verbunden sind.

Die Steuerungseinheiten 13, 23 sind untereinander mittels einer Busleitung 30 verbunden, die an den Steuerungseinheiten mittels einer entsprechenden Konnektierungseinheit verbunden ist.

Jede Steuerungseinheit weist einer CPU 15, 25, ein RAM 16, 26 und einen Flash-speicher 17, 27, der durch einen Integrierten Schaltkreis oder eine SD-Karte in einer entsprechenden Hardware-Schnittstelle realisiert ist, auf. RAM 16, 26 und CPU 15, 25 sind integral ausgeführt. Weiterhin ist an jeder Steuerungseinheit ein Schalter oder Taster, vorzugsweise ein magnetischer Sensor, insbesondere ein Hall-Sensor 18, 28 angeordnet, so dass ein Benutzer von außen den Hall-Sensor durch Anhalten eines Magneten auslösen kann.

Die dargestellte Fördervorrichtung kann grundsätzlich solcherart gesteuert werden, dass ein Gegenstand durch die Motorrolle 11 in den Bereich der Motorrolle gefördert wird und hierdurch von der Motorrolle weitergefördert werden kann. Die Lichtschrankensensoren 11 registrieren dabei zunächst eine Belegung des Fördersegments 10 und nach erfolgter Weiterförderung eine Belegung des Fördersegments 20. Diese Belegungssignale werden von den Lichtschrankensensoren an die entsprechenden Steuerungseinheiten 13, 23 gesendet.

Die Steuerung kann dabei in einem zentralen Steuerungsverfahren solcherart erfolgen, dass von einer SPS (nicht dargestellt), die an die Busleitung 30 angeschlossen ist, Steuerungsbefehle an die Steuerungseinheiten 13, 23 gesendet werden und die Sensorsignale der Sensoren über die Steuerungseinheiten 13, 23 und die Busleitung 30 an die SPS gesendet werden. Die SPS entscheidet dabei in logischen Operationsschritten, welches Fördersegment den Gegenstand fördern soll, sendet ein entsprechendes Förderantriebssignal über die Busleitung 30 an die entsprechende Steuerungseinheit 13 oder 23 und die Steuerungseinheit 13, 23 übermittelt hierbei dieses Steuerungssignal unmittelbar an den angeschlossenen Förderantrieb 11, beziehungsweise 21.

Demgegenüber können die Fördersegmente auch mit einem dezentralen Steuerungsverfahren betrieben werden. Hierbei übermittelt beispielsweise die Steuerungseinheit 23 über die Busleitung 30 an die Steuerungseinheit 13 ein Frei-Signal des Lichtschrankensensors, woraufhin die Steuerungseinheit 13 mit dem Prozessor logisch entscheidet, dass ein durch ein Belegt-Signal des Sensors detektierter Gegenstand in dem Fördersegment 10 durch Aktivierung des Förderantriebs 11 weitergefördert werden kann. Die Steuerungseinheit 13 sendet daraufhin an den Förderantrieb 11 ein Betätigungssignal und lässt den Förderantrieb für einen vorbestimmten Zeitraum laufen, um den Gegenstand in das Fördersegment 20 zu befördern. Grundsätzlich kann die Logik innerhalb des Prozessors auch vorsehen, dass die Aktivierung des Förderantriebs 11 erfolgt, wenn von der Steuerungseinheit 23 über die Busleitung signalisiert wird, dass der Förderantrieb 21 aktiviert wurde, sodass ein synchroner Blockabzug gesteuert wird, anstelle des zuvor beschriebenen Einzelabzugs.

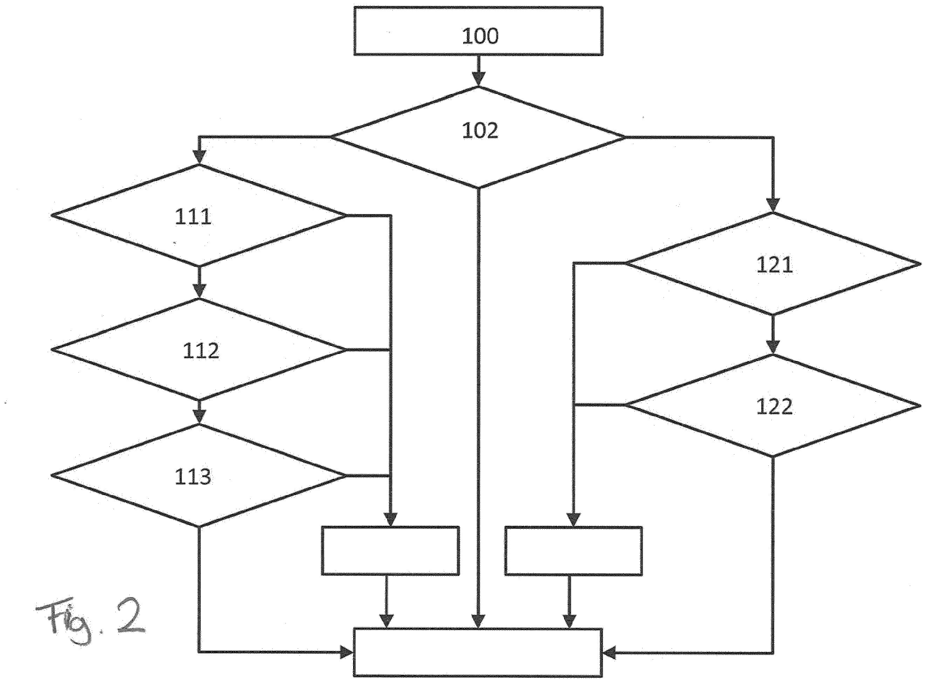

Die Steuerungseinheiten gemäß der Erfindung sind dazu konfigurierbar, um diese unterschiedlichen Steuerungsverfahren in unterschiedlichen Busprotokollsystemen durchführen zu können. Eine entsprechende Konfiguration hierfür ist in Fig. 2 dargestellt. Bei diesem Konfigurationsablauf wird in einem ersten Schritt 100 zunächst der HallSensor 18, beziehungsweise 28 ausgelöst und die Steuerungseinheit hierdurch in einen Konfigurationsmodus versetzt. In einem Entscheidungsschritt 102 zeigt die CPU hierbei durch wechselweises Blinken von zwei LEDs der optischen Benutzerschnittstelle dem Benutzer die wahlweise Konfiguration des Busprotokolls oder des Steuerungsverfahrens an und wartet auf eine erneute Auslösung des Hall-Sensors 18. Wird der Hall-Sensors18 bei Aktivierung der LED für die Bus-Protokollkonfiguration erneut ausgelöst, so springt das Konfigurationsmenü zum nächsten Entscheidungspunkt 111, wird der Hall-Sensors bei Aktivierung der LED für die Konfiguration des Steuerungsverfahrens erneut aktiviert, so springt das Konfigurationsmenü zu dem nächsten Entscheidungsfeld 121. Wird der Hall-Sensors nach fünfmaliger wechselweiser Aktivierung der LEDs für die beiden Konfigurationsmenüs nicht erneut betätigt, so springt das Konfigurationsmenü unmittelbar zum Ausgang und die Steuerungseinheit wird erneut in den normalen Operationsmodus zur Aktivierung eines Fördervorgangs versetzt.

In der Menüebene zur Konfiguration des Busprotokolls wird zunächst in einem ersten Entscheidungsschritt ein TCP/IP-Protokoll über die grafische Benutzerschnittstelle angezeigt, in dem eine hierfür bestimmte LED aktiviert wird. Wird während der Aktivierung dieser LED der Hall-Sensorserneut ausgelöst, so springt das Konfigurationsmenü zum Konfigurationsänderungsschritt und ändert das Busprotokoll auf eine TCP/IPBusprotokollkonfiguration. Wird hingegen der Hall-Sensorsinnerhalb von fünf Sekunden nicht ausgelöst, so springt das Konfigurationsmenü zum nächsten Entscheidungsschritt 112. Im Entscheidungsschritt 112 zeigt die grafische Benutzerschnittstelle mittels Aktivierung einer entsprechend anderen LED ein CAN-Busprotokoll an, welches erneut, wie zuvor, durch erneute Aktivierung des Hall-Sensorsinnerhalb von fünf Sekunden angewählt werden könnte, wodurch wiederum zum Konfigurationsänderungsschritt gesprungen würde. Erfolgt erneut keine Auslösung des Hall-Sensorsinnerhalb der fünf Sekunden, springt das Konfigurationsmenü zum nächsten Entscheidungsschritt 113, indem ein Profibusprotokoll durch entsprechende LED-Aktivierung angezeigt und ausgewählt werden kann. Erfolgt erneut keine Auswahl, so springt das Konfigurationsmenü unmittelbar zum Ausgang und die Förderanlage wird erneut in den regulären Operationsmodus versetzt.

Analog zu dieser Vorgehensweise kann in der anderen Menüebene über zwei Entscheidungspunkte 121, 122 zwischen einem zentralen Steuerungsverfahren und einem dezentralen Steuerungsverfahren ausgewählt werden und bei nicht erfolgter Auswahl eines dieser beiden Verfahren springt das Konfigurationsmenü erneut zum Ausgang und behält die bisherige Konfiguration bei. Grundsätzlich ist zu verstehen, dass innerhalb der Menüebenen und Menüpunkte weitere Auswahlmöglichkeiten und Verzweigungen realisiert werden können, beispielsweise um zwischen Block und Einzelabzug eine Auswahl zu treffen oder dergleichen.

## Patentansprüche

1. Fördervorrichtung zur Förderung von Behältern oder Paketen, umfassend:
- eine Mehrzahl von Fördersegmenten (10, 20), wobei jedes Fördersegment (10, 20) einen Förderantrieb (11, 21) und eine Steuerungseinheit (13, 23) zur Steuerung des Förderantriebs (11, 21) aufweist,
- eine Buskommunikation (30),
- wobei jede Steuerungseinheit (13, 23) in die Buskommunikation (30) eingebunden ist zum Senden und oder Empfangen von Steuerungssignalen über die Buskommunikation (30),
wobei jede Steuerungseinheit (13, 23)
- einen Mikroprozessor (15, 25) zur Verarbeitung von Steuerungssignalen und
- einen ersten, mit dem Mikroprozessor (15, 25) verbundenen elektronischen Speicher (16, 26) umfasst, in dem eine erste Steuerungskonfiguration abgespeichert ist, **dadurch gekennzeichnet, dass** jede Steuerungseinheit (13, 23)
- einen zweiten elektronischen Speicher (17, 27) umfasst, in dem eine zweite von der ersten verschiedenen Steuerungskonfiguration, vorzugsweise mehrere von den ersten verschiedenen Steuerungskonfigurationen abgespeichert sind,
- wobei jeder Mikroprozessor (15, 25) ausgebildet ist, um
∘ in einem ersten Betriebsmodus den Förderantrieb (11, 21) mit der im ersten Speicher (16, 26) abgespeicherten ersten Steuerungskonfiguration anzusteuern,
∘ bei Empfang eines Konfigurationsänderungsbefehls die zweite bzw. eine von der ersten verschiedene Steuerungskonfiguration aus dem zweiten Speicher (17, 27) in den ersten Speicher (16, 26) zu laden, und hiernach
o in einem zweiten Betriebsmodus den Förderantrieb (11, 21) mit der im ersten Speicher (16, 26) abgespeicherten zweiten bzw. von der ersten verschiedenen Steuerungskonfiguration anzusteuern.

2. Fördervorrichtung nach Anspruch 1,
**dadurch gekennzeichnet, dass** der Mikroprozessor ausgebildet ist, um bei Empfang des Konfigurationsänderungsbefehls die erste Steuerungskonfiguration aus dem ersten elektronischen Speicher (16, 26) durch die zweite bzw. die von der ersten verschiedenen Steuerungskonfiguration aus dem zweiten Speicher (17, 27) in dem ersten Speicher (16, 26) zu ersetzen.

3. Fördervorrichtung nach Anspruch 1 oder 2,
**dadurch gekennzeichnet, dass** der erste elektronische Speicher (16, 26) ein flüchtiger oder nichtflüchtiger Speicher, insbesondere ein Flash-Speicher ist und der zweite elektronische Speicher (17, 27) ein nichtflüchtiger Speicher, insbesondere ein Flash-Speicher ist.

4. Fördervorrichtung nach einem der vorhergehenden Ansprüche,
**dadurch gekennzeichnet, dass** die erste Steuerungskonfiguration ein erstes Busprotokoll zur Konfiguration der Datenkommunikation über die Buskommunikation (30) beinhaltet und die zweite bzw. die von der ersten verschiedenen Steuerungskonfiguration ein zweites, von dem ersten verschiedenen Busprotokoll zur Konfiguration der Datenkommunikation über die Buskommunikation (30) beinhaltet.

5. Fördervorrichtung nach einem der vorhergehenden Ansprüche,
**dadurch gekennzeichnet, dass**
- die erste Steuerungskonfiguration ein erstes Steuerungsverfahren beinhaltet, welches den Mikroprozessor zum Empfang von Steuerungsbefehlen über die Buskommunikation (30) und der Weiterleitung dieser Steuerungsbefehle an den Förderantrieb (11, 21) in einem zentralen Steuerungsmodus konfiguriert und
- die zweite bzw. die von der ersten verschiedene Steuerungskonfiguration ein zweites, von dem ersten verschiedenem Steuerungsverfahren beinhaltet, welches den Mikroprozessor zum Empfang eines Belegungssignals und/oder Fördersignals von einer Steuerungseinheit (13, 23) eines benachbarten Fördersegments (10, 20) und zur logischen Generierung eines Steuerungsbefehls in dem Mikroprozessor aus diesem Belegungssignal und/oder Fördersignal und der Versendung dieses Steuerungsbefehls an den Förderantrieb (11, 21) in einem dezentralen Steuerungsmodus konfiguriert.

6. Fördervorrichtung nach einem der vorhergehenden Ansprüche,
**dadurch gekennzeichnet, dass**
- die erste Steuerungskonfiguration ein erstes Steuerungsverfahren beinhaltet, welches den Mikroprozessor zur Steuerung eines ersten Fördermodus konfiguriert, und
- die zweite bzw. die von der ersten verschiedenen Steuerungskonfiguration ein zweites, von dem ersten verschiedenes Steuerungsverfahren beinhaltet, welches den Mikroprozessor zur Steuerung eines zweiten, von dem ersten verschiedenen Fördermodus konfiguriert,
- wobei der erste und/oder der zweite Fördermodus vorzugsweise ausgewählt ist aus
∘ einem Einzelabzugsmodus, in welchem der Mikroprozessor den Förderantrieb (11, 21) eines Fördersegments (10, 20) aktiviert, wenn er ein Signal erhält, welches beinhaltet, dass ein stromabwärts benachbart angeordnetes Fördersegment (10, 20) nicht belegt ist,
∘ einem Blockabzugsmodus, in welchem der Mikroprozessor den Förderantrieb (11, 21) eines Fördersegments (10, 20) aktiviert, wenn er ein Signal erhält, welches beinhaltet, dass der Förderantrieb (11, 21) eines stromabwärts benachbart angeordneten Fördersegments (10, 20) aktiviert,
∘ einem Transfermodus, in welchem der Mikroprozessor konfiguriert ist zur Ansteuerung eines Förderantriebs (11, 21) und eines Transferantriebs, der den geförderten Behälter oder das geförderte Paket aus dem Fördersegment (10, 20) horizontal ein- oder ausschleust,
∘ einem Hebemodus, in welchem der Mikroprozessor konfiguriert ist zur Ansteuerung eines Förderantriebs (11, 21) und eines Hebeantriebs, der den geförderten Behälter oder das geförderte Paket aus dem Fördersegment (10, 20) vertikal ein oder ausschleust, und einem Sortiermodus, in welchem der Mikroprozessor konfiguriert ist zum Empfang eines Sortiersignals und zur Ansteuerung eines Förderantriebs (11, 21) und eines Sortierantriebs, der den geförderten Behälter oder das geförderte Paket in Abhängigkeit des empfangenen Sortiersignals auf zumindest zwei, vorzugsweise mehrere unterschiedliche Ausgänge aus dem Fördersegment (10, 20) sortiert.

7. Fördervorrichtung nach einem der vorhergehenden Ansprüche,
**dadurch gekennzeichnet, dass** die Fördervorrichtung eine mit dem Mikroprozessor verbundene manuelle Benutzerschnittstelle umfasst und der Mikroprozessor ausgebildet ist, um einen Empfang eines Signals über die Benutzerschnittstelle als Konfigurationsänderungsbefehl zu verarbeiten, wobei vorzugsweise die manuelle Benutzerschnittstelle ein mit einem Magnetsignal auslösbarer Schalter ist, insbesondere ein Reed-Kontakt oder ein Hall-Sensor (18, 28).

8. Fördervorrichtung nach einem der vorhergehenden Ansprüche,
**dadurch gekennzeichnet, dass** die Steuerungseinheit (13, 23) eine mit dem Mikroprozessor verbundene optische Benutzerschnittstelle zur optischen Ausgabe von Signalen umfasst und der Mikroprozessor ausgebildet ist, um über die optische Benutzerschnittstelle eine Anzeige und/oder Auswahl der ersten und zweiten bzw. verschiedenen Steuerungskonfiguration anzuzeigen.

9. Fördervorrichtung nach Anspruch 7 und 8,
**dadurch gekennzeichnet, dass** der Mikroprozessor ausgebildet ist, um über die manuelle Benutzerschnittstelle eine Auswahl einer über die optische Benutzerschnittstelle angezeigten Steuerungskonfiguration zu empfangen, wobei vorzugsweise der Mikroprozessor ausgebildet ist, um über die manuelle Benutzerschnittstelle eine erste Auswahlebene zur Wahl zwischen Busprotokollauswahl oder Steuerungsverfahrenswahl zu steuern und über die optische Benutzerschnittstelle anzuzeigen und
- bei Wahl der Busprotokollauswahl in der ersten Auswahlebene eine zweite Auswahlebene zur Wahl zwischen verschiedenen Busprotokollen zu steuern und über die optische Benutzerschnittstelle anzuzeigen, und
- bei Wahl der Steuerungsverfahrensauswahl in der zweiten Auswahlebene die zweite Auswahlebene zur Wahl zwischen verschiedenen Steuerungsverfahren nach Anspruch 5 oder verschiedenen Steuerungsmodi nach Anspruch 6 zu steuern und über die optische Benutzerschnittstelle anzuzeigen.

10. Verfahren zum Steuern einer Fördervorrichtung zur Förderung von Behältern oder Paketen, die Fördervorrichtung umfassend:
- eine Mehrzahl von Fördersegmenten (10, 20), wobei jedes Fördersegment (10, 20) einen Förderantrieb (11, 21) und eine Steuerungseinheit (13, 23) mit einem Mikroprozessor (15, 25) zur Steuerung des Förderantriebs (11, 21) aufweist
- eine Buskommunikation (30), mit der die Steuerungseinheiten (13, 23) verbunden sind,
mit den Schritten:
- Abspeichern einer ersten Steuerungskonfiguration in einem mit dem Mikroprozessor verbundenen ersten elektronischen Speicher (16, 26) in der Steuerungseinheit (13, 23),
**gekennzeichnet durch** die Schritte:
- Abspeichern einer zweiten von der ersten verschiedenen Steuerungskonfiguration, vorzugsweise mehrerer von der ersten verschiedene Steuerungskonfigurationen in einem zweiten elektronischen Speicher (17, 27) in der Steuerungseinheit (13, 23),
- Verarbeiten von Steuerungssignalen in dem Mikroprozessor und Ansteuern des Förderantriebs (11, 21) nach der ersten Steuerungskonfiguration in einem ersten Betriebsmodus,
- Empfangen eines Konfigurationsänderungsbefehls
- Laden der zweiten bzw. der von der ersten verschiedenen Steuerungskonfiguration aus dem zweiten Speicher (17, 27) in den ersten Speicher (16, 26), insbesondere Ersetzen der ersten Steuerungskonfiguration **durch** die zweite bzw. die von der ersten verschiedene Steuerungskonfiguration und hiernach
- Verarbeiten von Steuerungssignalen in dem Mikroprozessor (15, 25) und Ansteuern
des Förderantriebs (11, 21) nach der zweiten bzw. der von der ersten verschiedenen Steuerungskonfiguration in einem zweiten Betriebsmodus.

11. Verfahren nach Anspruch 10,
**dadurch gekennzeichnet, dass**
- die erste Steuerungskonfiguration ein erstes Busprotokoll zur Konfiguration der Datenkommunikation über die Buskommunikation (30) beinhaltet und die Steuerungseinheit (13, 23) in dem ersten Betriebsmodus nach dem ersten Busprotokoll über die Buskommunikation (30) sendet und/oder empfängt und
- die zweite bzw. die von der ersten verschiedenen Steuerungskonfiguration ein zweites, von dem ersten verschiedenes Busprotokoll beinhaltet und die Steuerungseinheit (13, 23) in dem zweiten Betriebsmodus nach dem zweiten Busprotokoll über die Buskommunikation (30) sendet und/oder empfängt.

12. Verfahren nach Anspruch 10 oder 11,
**dadurch gekennzeichnet, dass**
- die erste Steuerungskonfiguration ein erstes zentrales Steuerungsverfahren beinhaltet und der Mikroprozessor im ersten Betriebsmodus Steuerungsbefehle über die Buskommunikation (30) empfängt und diese Steuerungsbefehle an den Förderantrieb (11, 21) weiterleitet und
- die zweite bzw. die von der ersten verschiedene Steuerungskonfiguration ein zweites, von dem ersten verschiedenes dezentrales Steuerungsverfahren beinhaltet und der Mikroprozessor in dem zweiten Betriebsmodus
∘ ein Belegungssignals und/oder Fördersignal von einer Steuerungseinheit (13, 23) eines benachbarten Fördersegments (10, 20) empfängt,
∘ dieses Belegungssignal und/oder Fördersignal logisch verarbeitet,
∘ in der logischen Verarbeitung einen Steuerungsbefehl generiert
∘ diesen Steuerungsbefehl an den Förderantrieb (11, 21) versendet.

13. Verfahren nach einem der vorhergehenden Ansprüche 10-12,
**dadurch gekennzeichnet, dass** der Mikroprozessor den Konfigurationsänderungsbefehl über eine manuelle Benutzerschnittstelle an der Steuerungseinheit (13, 23) empfängt (100), insbesondere durch Auslösen eines Schalters, insbesondere eines Reed-Kontakts oder eines Hallsensors (18, 28), mit einem Magnetsignal.

14. Verfahren nach einem der vorhergehenden Ansprüche 10-13,
**dadurch gekennzeichnet, dass** der Mikroprozessor über eine optische Benutzerschnittstelle ein Signal für eine Anzeige und/oder Auswahl der ersten und zweiten bzw. verschiedenen Steuerungskonfiguration ausgibt (102).

15. Verfahren nach Anspruch 13 und 14,
**dadurch gekennzeichnet, dass** der Mikroprozessor über die manuelle Benutzerschnittstelle eine Auswahl einer über die optische Benutzerschnittstelle angezeigten Steuerungskonfiguration empfängt, wobei vorzugsweise
der Mikroprozessor
- über die manuelle Benutzerschnittstelle ein Signal für eine erste Auswahlebene zur Wahl zwischen Busprotokollauswahl oder Steuerungsverfahrenswahl empfängt und über die optische Benutzerschnittstelle anzeigt (102), und
- bei Wahl der Busprotokollauswahl in der ersten Auswahlebene über die manuelle Benutzerschnittstelle in einer zweiten Auswahlebene ein Signal zur Wahl zwischen verschiedenen Busprotokollen empfängt und über die optische Benutzerschnittstelle anzeigt (111, 112, 113), und
- bei Wahl der Steuerungsverfahrensauswahl in der ersten Auswahlebene über die manuelle Benutzerschnittstelle in einer zweiten Auswahlebene ein Signal zur Wahl zwischen verschiedenen Steuerungsverfahren empfängt und über die optische Benutzerschnittstelle anzeigt (121, 122).

16. Verfahren nach einem der vorhergehenden Ansprüche 10-15,
**dadurch gekennzeichnet, dass**
- die Fördervorrichtung in der ersten Steuerungskonfiguration über den Mikroprozessor einen ersten Fördermodus steuert, und
- die Fördervorrichtung in der zweiten bzw. der von der ersten verschiedenen Steuerungskonfiguration über den Mikroprozessor einen zweiten, von dem ersten verschiedenen Fördermodus steuert,
- wobei der erste und/oder der zweite Fördermodus vorzugsweise ausgewählt ist aus
∘ einem Einzelabzugsmodus, in welchem der Mikroprozessor den Förderantrieb (11, 21) eines Fördersegments (10, 20) aktiviert, wenn er ein Signal erhält, welches beinhaltet, dass ein stromabwärts benachbart angeordnetes Fördersegment (10, 20) nicht belegt ist,
∘ einem Blockabzugsmodus, in welchem der Mikroprozessor den Förderantrieb (11, 21) eines Fördersegments (10, 20) aktiviert, wenn er ein Signal erhält, welches beinhaltet, dass der Förderantrieb (11, 21) eines stromabwärts benachbart angeordneten Fördersegments (10, 20) aktiviert,
∘ einem Transfermodus, in welchem der Mikroprozessor konfiguriert ist zur Ansteuerung eines Förderantriebs (11, 21) und eines Transferantriebs, der den geförderten Behälter oder das geförderte Paket aus dem Fördersegment (10, 20) horizontal ein- oder ausschleust,
∘ einem Hebemodus, in welchem der Mikroprozessor konfiguriert ist zur Ansteuerung eines Förderantriebs (11, 21) und eines Hebeantriebs, der den geförderten Behälter oder das geförderte Paket aus dem Fördersegment (10, 20) vertikal ein oder ausschleust, und
∘ einem Sortiermodus, in welchem der Mikroprozessor konfiguriert ist zum Empfang eines Sortiersignals und zur Ansteuerung eines Förderantriebs (11, 21) und eines Sortierantriebs, den geförderten Behälter oder das geförderte Paket in Abhängigkeit des empfangenen Sortiersignals auf zumindest zwei, vorzugsweise mehrere unterschiedliche Ausgänge aus dem Fördersegment (10, 20) sortiert.

## Claims

1. Conveying device for conveying containers or packages, comprising:
- a plurality of conveying segments (10, 20), wherein each conveying segment (10, 20) has a conveying drive (11, 21) and a control unit (13, 23) for controlling the conveying drive (11, 21),
- bus communication (30),
- wherein each control unit (13, 23) is incorporated in the bus communication (30) for the purpose of transmitting and/or receiving control signals via the bus communication (30),
wherein each control unit (13, 23) comprises
- a microprocessor (15, 25) for processing control signals and
- a first electronic memory (16, 26) which is connected to the microprocessor (15, 25) and stores a first control configuration,
**characterized**
**in that** each control unit (13, 23)
- comprises a second electronic memory (17, 27) which stores a second control configuration that differs from the first, preferably a plurality of control configurations that differ from the first,
- wherein each microprocessor (15, 25) is designed
o to control the conveying drive (11, 21) with the first control configuration stored in the first memory (16, 26) in a first operating mode,
o to load the second control configuration or a control configuration that differs from the first from the second memory (17, 27) into the first memory (16, 26) when a configuration change command is received, and then
o to control the conveying drive (11, 21) with the second control configuration or the control configuration that differs from the first, which is stored in the first memory (16, 26), in a second operating mode.

2. Conveying device according to Claim 1,
**characterized**
**in that** the microprocessor is designed, when the configuration change command is received, to replace the first control configuration from the first electronic memory (16, 26) with the second control configuration or the control configuration that differs from the first from the second memory (17, 27) in the first memory (16, 26).

3. Conveying device according to Claim 1 or 2,
**characterized**
**in that** the first electronic memory (16, 26) is a volatile or non-volatile memory, in particular a flash memory, and the second electronic memory (17, 27) is a non-volatile memory, in particular a flash memory.

4. Conveying device according to one of the preceding claims,
**characterized**
**in that** the first control configuration comprises a first bus protocol for configuring the data communication via the bus communication (30) and the second control configuration or the control configuration that differs from the first comprises a second bus protocol, which differs from the first, for configuring the data communication via the bus communication (30).

5. Conveying device according to one of the preceding claims, **characterized in that**
- the first control configuration comprises a first control method which configures the microprocessor to receive control commands via the bus communication (30) and to forward these control commands to the conveying drive (11, 21) in a central control mode, and
- the second control configuration or the control configuration that differs from the first comprises a second control method which differs from the first and configures the microprocessor to receive an occupation signal and/or a conveying signal from a control unit (13, 23) of an adjacent conveying segment (10, 20) and to logically generate a control command in the microprocessor from this occupation signal and/or conveying signal and to transmit this control command to the conveying drive (11, 21) in a decentralized control mode.

6. Conveying device according to one of the preceding claims, **characterized in that**
- the first control configuration comprises a first control method which configures the microprocessor to control a first conveying mode, and
- the second control configuration or the control configuration that differs from the first comprises a second control method which differs from the first and configures the microprocessor to control a second conveying mode that differs from the first,
- wherein the first and/or the second conveying mode is preferably selected from
o an individual removal mode in which the microprocessor activates the conveying drive (11, 21) of a conveying segment (10, 20) if it receives a signal indicating that a conveying segment (10, 20) adjacently arranged downstream is not occupied,
o a block removal mode in which the microprocessor activates the conveying drive (11, 21) of a conveying segment (10, 20) if it receives a signal indicating that the conveying drive (11, 21) of a conveying segment (10, 20) adjacently arranged downstream is activated,
o a transfer mode in which the microprocessor is configured to control a conveying drive (11, 21) and a transfer drive which horizontally channels the conveyed container or the conveyed package into or out of the conveying segment (10, 20),
o a lifting mode in which the microprocessor is configured to control a conveying drive (11, 21) and a lifting drive which vertically channels the conveyed container or the conveyed package into or out of the conveying segment (10, 20), and a sorting mode in which the microprocessor is configured to receive a sorting signal and to control a conveying drive (11, 21) and a sorting drive which sorts the conveyed container or the conveyed package to at least two, preferably a plurality of, different outlets from the conveying segment (10, 20) on the basis of the received sorting signal.

7. Conveying device according to one of the preceding claims,
**characterized**
**in that** the conveying device comprises a manual user interface which is connected to the microprocessor, and the microprocessor is designed to process reception of a signal via the user interface as a configuration change command, wherein the manual user interface is preferably a switch that can be triggered with a magnetic signal, in particular a reed contact or a Hall sensor (18, 28).

8. Conveying device according to one of the preceding claims,
**characterized**
**in that** the control unit (13, 23) comprises an optical user interface which is connected to the microprocessor and is intended to optically output signals, and the microprocessor is designed to display a display and/or selection of the first and second or different control configuration via the optical user interface.

9. Conveying device according to Claims 7 and 8,
**characterized**
**in that** the microprocessor is designed to receive, via the manual user interface, a selection of a control configuration displayed via the optical user interface, wherein the microprocessor is preferably designed to control a first selection level for selecting between a bus protocol selection or a control method selection via the manual user interface and to display it via the optical user interface, and
- if the bus protocol selection is selected in the first selection level, to control a second selection level for selecting between different bus protocols and to display it via the optical user interface, and
- if the control method selection is selected in the second selection level, to control the second selection level for selecting between different control methods according to Claim 5 or different control modes according to Claim 6 and to display it via the optical user interface.

10. Method for controlling a conveying device for conveying containers or packages, the conveying device comprising:
- a plurality of conveying segments (10, 20), wherein each conveying segment (10, 20) has a conveying drive (11, 21) and a control unit (13, 23) having a microprocessor (15, 25) for controlling the conveying drive (11, 21),
- bus communication (30), to which the control units (13, 23) are connected, having the steps of:
- storing a first control configuration in a first electronic memory (16, 26) connected to the microprocessor in the control unit (13, 23),
**characterized by** the steps of:
- storing a second control configuration that differs from the first, preferably a plurality of control configurations that differ from the first, in a second electronic memory (17, 27) in the control unit (13, 23),
- processing control signals in the microprocessor and controlling the conveying drive (11, 21) according to the first control configuration in a first operating mode,
- receiving a configuration change command,
- loading the second control configuration or the control configuration that differs from the first from the second memory (17, 27) into the first memory (16, 26), in particular replacing the first control configuration with the second control configuration or the control configuration that differs from the first and then
- processing control signals in the microprocessor (15, 25) and controlling the conveying drive (11, 21) according to the second control configuration or the control configuration that differs from the first in a second operating mode.

11. Method according to Claim 10,
**characterized in that**
- the first control configuration comprises a first bus protocol for configuring the data communication via the bus communication (30), and the control unit (13, 23) transmits and/or receives according to the first bus protocol via the bus communication (30) in the first operating mode, and
- the second control configuration or the control configuration that differs from the first comprises a second bus protocol that differs from the first, and the control unit (13, 23) transmits and/or receives according to the second bus protocol via the bus communication (30) in the second operating mode.

12. Method according to Claim 10 or 11,
**characterized in that**
- the first control configuration comprises a first central control method, and the microprocessor receives control commands via the bus communication (30) in the first operating mode and forwards these control commands to the conveying drive (11, 21), and
- the second control configuration or the control configuration that differs from the first comprises a second, decentralized control method that differs from the first, and the microprocessor, in the second operating mode,
o receives an occupation signal and/or conveying signal from a control unit (13, 23) of an adjacent conveying segment (10, 20),
o logically processes this occupation signal and/or conveying signal,
o generates a control command in the logical processing,
o transmits this control command to the conveying drive (11, 21).

13. Method according to one of the preceding Claims 10-12,
**characterized**
**in that** the microprocessor receives (100) the configuration change command via a manual user interface on the control unit (13, 23), in particular by triggering a switch, in particular a reed contact or a Hall sensor (18, 28), with a magnetic signal.

14. Method according to one of the preceding Claims 10-13,
**characterized**
**in that** the microprocessor outputs (102) a signal for displaying and/or selecting the first and second or different control configuration via an optical user interface.

15. Method according to Claims 13 and 14,
**characterized**
**in that** the microprocessor receives, via the manual user interface, a selection of a control configuration displayed via the optical user interface, wherein the microprocessor preferably
- receives, via the manual user interface, a signal for a first selection level for selecting between the bus protocol selection and the control method selection and displays (102) said signal via the optical user interface, and
- if the bus protocol selection is selected in the first selection level, receives, via the manual user interface, a signal for selecting between different bus protocols in a second selection level and displays (111, 112, 113) said signal via the optical user interface, and
- if the control method selection is selected in the first selection level, receives, via the manual user interface, a signal for selecting between different control methods in a second selection level and displays (121, 122) said signal via the optical user interface.

16. Method according to one of the preceding Claims 10-15,
**characterized in that**
- the conveying device controls a first conveying mode in the first control configuration via the microprocessor, and
- the conveying device controls a second conveying mode that differs from the first in the second control configuration or the control configuration that differs from the first via the microprocessor,
- wherein the first and/or the second conveying mode is preferably selected from
o an individual removal mode in which the microprocessor activates the conveying drive (11, 21) of a conveying segment (10, 20) if it receives a signal indicating that a conveying segment (10, 20) adjacently arranged downstream is not occupied,
o a block removal mode in which the microprocessor activates the conveying drive (11, 21) of a conveying segment (10, 20) if it receives a signal indicating that the conveying drive (11, 21) of a conveying segment (10, 20) adjacently arranged downstream is activated,
o a transfer mode in which the microprocessor is configured to control a conveying drive (11, 21) and a transfer drive which horizontally channels the conveyed container or the conveyed package into or out of the conveying segment (10, 20),
o a lifting mode in which the microprocessor is configured to control a conveying drive (11, 21) and a lifting drive which vertically channels the conveyed container or the conveyed package into or out of the conveying segment (10, 20), and
o a sorting mode in which the microprocessor is configured to receive a sorting signal and to control a conveying drive (11, 21) and a sorting drive which sorts the conveyed container or the conveyed package to at least two, preferably a plurality of, different outlets from the conveying segment (10, 20) on the basis of the received sorting signal.

## Revendications

1. Dispositif de transport destiné à transporter des récipients ou des colis, comprenant :
- une pluralité de segments de transport (10, 20), chaque segment de transport (10, 20) possédant un mécanisme d'entraînement de transport (11, 21) et une unité de commande (13, 23) destinée à commander le mécanisme d'entraînement de transport (11, 21),
- une communication par bus (30),
- chaque unité de commande (13, 23) étant intégrée dans la communication par bus (30) pour émettre ou recevoir des signaux de commande par le biais de la communication par bus (30),
chaque unité de commande (13, 23) comportant
- un microprocesseur (15, 25) destiné au traitement de signaux de commande et
- une première mémoire électronique (16, 26), connectée au microprocesseur (15, 25), dans laquelle est enregistrée une première configuration de commande,
**caractérisé en ce**
**que** chaque unité de commande (13, 23)
- comporte une deuxième mémoire électronique (17, 27), dans laquelle est enregistrée une deuxième configuration de commande, différente de la première, de préférence plusieurs configurations de commande, différentes de la première,
- chaque microprocesseur (15, 25) étant configuré pour
o dans un premier mode de fonctionnement, commander le mécanisme d'entraînement de transport (11, 21) avec la première configuration de commande enregistrée dans la première mémoire (16, 26),
o lors de la réception d'une instruction de changement de configuration, charger la deuxième configuration de commande ou l'une de celles différentes de la première depuis la deuxième mémoire (17, 27) dans la première mémoire (16, 26), et ensuite
o dans un deuxième mode de fonctionnement, commander le mécanisme d'entraînement de transport (11, 21) avec la deuxième configuration de commande ou celle différente de la première enregistrée dans la première mémoire (16, 26).

2. Dispositif de transport selon la revendication 1,
**caractérisé en ce**
**que** le microprocesseur est configuré pour, lors de la réception de l'instruction de changement de configuration, remplacer la première configuration de commande de la première mémoire électronique (16, 26) par la deuxième configuration de commande ou celle différente de la première de la deuxième mémoire (17, 27) dans la première mémoire (16, 26).

3. Dispositif de transport selon la revendication 1 ou 2,
**caractérisé en ce**
**que** la première mémoire électronique (16, 26) est une mémoire volatile ou non volatile, en particulier une mémoire Flash, et la deuxième mémoire électronique (17, 27) est une mémoire non volatile, en particulier une mémoire Flash.

4. Dispositif de transport selon l'une des revendications précédentes,
caractérisé en ce
la première configuration de commande contient un premier protocole de bus pour la configuration de la communication de données par le biais de la communication par bus (30) et la deuxième configuration de commande ou celle différente de la première contient un deuxième protocole de bus, différent du premier, pour la configuration de la communication de données par le biais de la communication par bus (30).

5. Dispositif de transport selon l'une des revendications précédentes,
**caractérisé en ce que**
- la première configuration de commande contient un premier procédé de commande, lequel configure le microprocesseur pour la réception d'instructions de commande par le biais de la communication par bus (30) et la retransmission de ces instructions de commande au mécanisme d'entraînement de transport (11, 21) dans un mode de commande centralisé
et
- la deuxième configuration de commande ou celle différente de la première contient un deuxième procédé de commande, différent du premier, lequel configure le microprocesseur pour la réception d'un signal d'occupation et/ou d'un signal de transport depuis une unité de commande (13, 23) d'un segment de transport (10, 20) voisin et pour la génération logique d'une instruction de commande dans le microprocesseur à partir de ce signal d'occupation et/ou de ce signal de transport et l'envoi de cette instruction de commande au mécanisme d'entraînement de transport (11, 21) dans un mode de commande décentralisé.

6. Dispositif de transport selon l'une des revendications précédentes,
**caractérisé en ce que**
- la première configuration de commande contient un premier procédé de commande, lequel configure le microprocesseur pour la commande d'un premier mode de transport, et
- la deuxième configuration de commande ou celle différente de la première contient un deuxième procédé de commande, différent du premier, lequel configure le microprocesseur pour la commande d'un deuxième mode de transport, différent du premier,
- le premier et/ou le deuxième mode de transport étant de préférence choisi parmi
o un mode d'extraction individuelle, dans lequel le microprocesseur active le mécanisme d'entraînement de transport (11, 21) d'un segment de transport (10, 20) lorsqu'il reçoit un signal qui contient qu'un segment de transport (10, 20) disposé voisin en aval n'est pas occupé,
o un mode d'extraction par bloc, dans lequel le microprocesseur active le mécanisme d'entraînement de transport (11, 21) d'un segment de transport (10, 20) lorsqu'il reçoit un signal qui contient que le mécanisme d'entraînement de transport (11, 21) active un segment de transports (10, 20) disposé voisin en aval,
o un mode de transfert, dans lequel le microprocesseur est configuré pour commander un mécanisme d'entraînement de transport (11, 21) et un mécanisme d'entraînement de transfert, qui fait pénétrer ou évacue horizontalement le récipient transporté ou le colis transporté hors du segment de transport (10, 20),
o un mode de levage, dans lequel le microprocesseur est configuré pour commander un mécanisme d'entraînement de transport (11, 21) et un mécanisme d'entraînement de levage, qui fait pénétrer ou évacue verticalement le récipient transporté ou le colis transporté hors du segment de transport (10, 20), et un mode de tri, dans lequel le microprocesseur est configuré pour recevoir un signal de tri et pour commander un mécanisme d'entraînement de transport (11, 21) et un mécanisme d'entraînement de tri, qui trie le récipient transporté ou le colis transporté en fonction du signal de tri reçu sur au moins deux sorties différentes, de préférence plus, hors du segment de transport (10, 20).

7. Dispositif de transport selon l'une des revendications précédentes,
**caractérisé en ce**
**que** le dispositif de transport comporte une interface utilisateur manuelle connectée au microprocesseur et le microprocesseur est configuré pour traiter une réception d'un signal par le biais de l'interface utilisateur comme une instruction de changement de configuration, l'interface utilisateur manuelle étant de préférence un commutateur déclenchable avec un signal magnétique, notamment un contact Reed ou un capteur à effet Hall (18, 28).

8. Dispositif de transport selon l'une des revendications précédentes,
**caractérisé en ce**
**que** l'unité de commande (13, 23) comporte une interface utilisateur optique connectée au microprocesseur destinée à la délivrance optique de signaux et le microprocesseur est configuré pour afficher, par le biais de l'interface utilisateur optique, une indication et/ou une sélection de la première et de la deuxième configuration de commande ou celle différente de la première.

9. Dispositif de transport selon la revendication 7 et 8,
**caractérisé en ce**
**que** le microprocesseur est configuré pour, par le biais de l'interface utilisateur manuelle, recevoir une sélection d'une configuration de commande affichée par le biais de l'interface utilisateur optique, le microprocesseur étant de préférence configuré pour, par le biais de l'interface utilisateur manuelle, commander un premier niveau de sélection pour la sélection entre une sélection du protocole de bus ou une sélection du procédé de commande et l'afficher par le biais de l'interface utilisateur optique, et
- lors de la sélection de la sélection du protocole de bus dans le premier niveau de sélection, commander un deuxième niveau de sélection pour la sélection entre différents protocoles de bus et l'afficher par le biais de l'interface utilisateur optique, et
- lors de la sélection de la sélection du protocole de commande dans le deuxième niveau de sélection, commander le deuxième niveau de sélection pour la sélection entre différents procédés de commande selon la revendication 5 ou différents modes de commande selon la revendication 6 et l'afficher par le biais de l'interface utilisateur optique.

10. Procédé de commande d'un dispositif de transport destiné à transporter des récipients ou des colis, le dispositif de transport comprenant :
- une pluralité von segment de transport (10, 20), chaque segment de transport (10, 20) possédant un mécanisme d'entraînement de transport (11, 21) et une unité de commande (13, 23) pourvue d'un microprocesseur (15, 25) pour la commande du mécanisme d'entraînement de transport (11, 21)
- une communication par bus (30), à laquelle sont connectées les unités de commande (13, 23),
comprenant les étapes suivantes :
- enregistrement d'une première configuration de commande dans une première mémoire électronique (16, 26) connectée au microprocesseur dans l'unité de commande (13, 23),
**caractérisé par** les étapes suivantes :
- enregistrement d'une deuxième configuration de commande, différente de la première, de préférence plusieurs configurations de commande différentes de la première, dans une deuxième mémoire électronique (17, 27) dans l'unité de commande (13, 23),
- traitement de signaux de commande dans le microprocesseur et commande du mécanisme d'entraînement de transport (11, 21) selon la première configuration de commande dans un premier mode de fonctionnement,
- réception d'une instruction de changement de configuration
- chargement de la deuxième configuration de commande, ou de celle différente de la première, de la deuxième mémoire (17, 27) dans la première mémoire (16, 26), notamment remplacement de la première configuration de commande par la deuxième configuration de commande, ou celle différente de la première, et ensuite
- traitement de signaux de commande dans le microprocesseur (15, 25) et commande du mécanisme d'entraînement de transport (11, 21) selon la deuxième configuration de commande ou celle différente de la première dans un deuxième mode de fonctionnement.

11. Procédé selon la revendication 10,
**caractérisé en ce que**
- la première configuration de commande contient un premier protocole de bus pour la configuration de la communication de données par le biais de la communication par bus (30) et l'unité de commande (13, 23), dans le premier mode de fonctionnement, émet et/ou reçoit par le biais de la communication par bus (30) selon le premier protocole de bus, et
- la deuxième configuration de commande, ou celle différente de la première, contient un deuxième protocole de bus, différent du premier, et l'unité de commande (13, 23), dans le deuxième mode de fonctionnement, émet et/ou reçoit par le biais de la communication par bus (30) selon le deuxième protocole de bus.

12. Procédé selon la revendication 10 ou 11,
**caractérisé en ce que**
- la première configuration de commande contient un premier procédé de commande centralisé et le microprocesseur, dans le premier mode de fonctionnement, reçoit des instructions de commande par le biais de la communication par bus (30) et retransmet ces instructions de commande au mécanisme d'entraînement de transport (11, 21), et
- la deuxième configuration de commande, ou celle différente de la première, contient un deuxième procédé de commande décentralisé, différent du premier, et le microprocesseur, dans le deuxième mode de fonctionnement,
o reçoit un signal d'occupation et/ou un signal de transport d'une unité de commande (13, 23) d'un segment de transport (10, 20) voisin,
o traite logiquement ce signal d'occupation et/ou ce signal de transport,
o génère une instruction de commande dans le traitement logique
o envoie cette instruction de commande au mécanisme d'entraînement de transport (11, 21).

13. Procédé selon l'une des revendications précédentes 10 à 12,
**caractérisé en ce**
**que** le microprocesseur reçoit (100) l'instruction de changement de configuration par le biais d'une interface utilisateur manuelle sur l'unité de commande (13, 23), en particulier par déclenchement d'un commutateur, en particulier un contact Reed ou un capteur à effet Hall (18, 28), avec un signal magnétique.

14. Procédé selon l'une des revendications précédentes 10 à 13,
**caractérisé en ce**
**que** le microprocesseur délivre (102), par le biais d'une interface utilisateur optique, un signal pour une indication et/ou une sélection de la première et de la deuxième configuration de commande ou de celle différente de la première.

15. Procédé selon les revendications 13 et 14,
**caractérisé en ce**
**que** le microprocesseur reçoit, par le biais de l'interface utilisateur manuelle, une sélection d'une configuration de commande affichée par le biais de l'interface utilisateur optique, le microprocesseur, de préférence,
- recevant par le biais de l'interface utilisateur manuelle un signal pour un premier niveau de sélection pour la sélection entre une sélection du protocole de bus ou une sélection du procédé de commande et l'affiche (102) par le biais de l'interface utilisateur optique, et
- lors de la sélection de la sélection du protocole de bus dans le premier niveau de sélection par le biais de l'interface utilisateur manuelle, reçoit dans un deuxième niveau de sélection un signal pour la sélection entre différents protocoles de bus et l'affiche (111, 112, 113) par le biais de l'interface utilisateur optique, et
- lors de la sélection de la sélection du procédé de commande dans le premier niveau de sélection par le biais de l'interface utilisateur manuelle, reçoit dans un deuxième niveau de sélection un signal pour la sélection entre différents procédés de commande et l'affiche (121, 122) par le biais de l'interface utilisateur optique.

16. Procédé selon l'une des revendications précédentes 10 à 15,
**caractérisé en ce que**
- le dispositif de transport, dans la première configuration de commande, commande par le biais du microprocesseur un premier mode de transport, et
- le dispositif de transport, dans la deuxième configuration de commande ou celle différente de la première, commande par le biais du microprocesseur un deuxième mode de transport, différent du premier,
- le premier et/ou le deuxième mode de transport étant de préférence choisi parmi
o un mode d'extraction individuelle, dans lequel le microprocesseur active le mécanisme d'entraînement de transport (11, 21) d'un segment de transport (10, 20) lorsqu'il reçoit un signal qui contient qu'un segment de transport (10, 20) disposé voisin en aval n'est pas occupé,
o un mode d'extraction par bloc, dans lequel le microprocesseur active le mécanisme d'entraînement de transport (11, 21) d'un segment de transport (10, 20) lorsqu'il reçoit un signal qui contient que le mécanisme d'entraînement de transport (11, 21) active un segment de transports (10, 20) disposé voisin en aval,
o un mode de transfert, dans lequel le microprocesseur est configuré pour commander un mécanisme d'entraînement de transport (11, 21) et un mécanisme d'entraînement de transfert, qui fait pénétrer ou évacue horizontalement le récipient transporté ou le colis transporté hors du segment de transport (10, 20),
o un mode de levage, dans lequel le microprocesseur est configuré pour commander un mécanisme d'entraînement de transport (11, 21) et un mécanisme d'entraînement de levage, qui fait pénétrer ou évacue verticalement le récipient transporté ou le colis transporté hors du segment de transport (10, 20), et
o un mode de tri, dans lequel le microprocesseur est configuré pour recevoir un signal de tri et pour commander un mécanisme d'entraînement de transport (11, 21) et un mécanisme d'entraînement de tri, qui trie le récipient transporté ou le colis transporté en fonction du signal de tri reçu sur au moins deux sorties différentes, de préférence plus, hors du segment de transport (10, 20).
